# DEMANDE DE BREVET EUROPEEN

(11) **EP 4 395 235 A1**
(43) Date de publication de la demande: **03.07.2024**
(21) Numéro de dépôt: 23220224.2
(22) Date de dépôt: 26.12.2023
(51) Int. Cl.: H04L 9/40, H04W 12/02

(54) **PROCÉDÉ D'ANONYMISATION D'UNE COMMUNICATION ENTRE UNE APPLICATION SOURCE ET UNE APPLICATION DESTINATAIRE; SYSTÈME, MODULE ET PRODUIT PROGRAMME D'ORDINATEUR ASSOCIÉS**

(30) Priorité: 27.12.2022 FR 2214527
(71) Demandeur: THALES, 92190 Meudon (FR)
(72) Inventeur: LEBLANC, Thibault, 92622 GENNEVILLIERS CEDEX (FR); WION, Adrien, 92622 GENNEVILLIERS CEDEX (FR); SCHOLLER, Franck, 92622 GENNEVILLIERS CEDEX (FR)
(74) Mandataire: Lavoix

(57) **Abrégé**

Ce procédé (300) d'anonymisation d'une communication entre une application source (114) et une application destinataire (214), comporte les étapes consistant à : création (600), pour l'application source, d'un message, ledit message intégrant au moins un port logique réel (PLRs, PLRd) de l'application source ou de l'application destinataire ; interception (410), par un module de saut de port côté application source (124), du message ; substitution du port logique réel par un port logique virtuel (PLVs, PLVd), pour créer un message anonymisé ; transmission (730) du message anonymisé sur un réseau (2) vers l'application destinataire ; réception (750), par un module de saut de port côté application destinataire (224), du message anonymisé ; substitution inverse du port logique virtuel par le port logique réel ; et, communication (770) du message à l'application destinataire.

## Description

L'invention a pour domaine général celui des procédés de sécurisation des communications (en particulier des communications paquétisées, notamment des communication TCP-IP), à travers un réseau de non-confiance (« zéro trust » en anglais).

Afin de protéger les communications entre un équipement source d'un message et un équipement destinataire de ce message, les procédés de sécurisation connus ont pour but de rendre le message indéchiffrable.

Pour cela, ces procédés de sécurisation s'appuient sur des méthodes d'authentification (prouvant que la source et/ou le destinataire sont bien les entités attendues), de chiffrement (pour éviter qu'un tiers puisse interpréter la communication s'il l'écoute sur le réseau), et/ou d'intégrité (pour éviter qu'un tiers puisse injecter des messages dans la communication en cours).

Ces procédés de sécurisation peuvent être mis en oeuvre de bout en bout, comme par exemple en utilisant le protocole de « sécurisation de la couche de transport » - TLS (pour « Transport Layer Security » en anglais), afin de protéger la partie de charge utile (« payload ») des paquets formant les messages de la communication. Le protocole TLS a remplacé le protocole SSL (« Service" socket » Layer » ou couche de" socket » sécurisé).

Cependant, de tels procédés laissent malgré tout divers identifiants techniques exposés. Ces identifiants techniques sont nécessaires au bon acheminement du trafic sur le réseau. Il s'agit en particulier de l'adresse IP de la machine source, l'adresse IP de la machine destinataire, le port logique de l'application source exécutée sur la machine source, et port logique de l'application destinataire exécutée sur la machine destinataire.

L'exposition de ces identifiants techniques peut suffire pour caractériser une communication : identifiant des machines en communication, nature des applications en communication (car souvent le port logique utilisé est un port logique réservé pour un type particulier de service et par conséquent de communication), les heures de début et de fin de session, la fréquence des sessions, etc. Une analyse statistique de ces informations associées aux identifiants techniques permet de collecter, éventuellement par croisement avec d'autres informations, du renseignement, par exemple sur l'infrastructure qui produit les échanges interceptés ou les personnes physiques impliquées dans les échanges interceptés.

Afin de masquer ces identifiants techniques, des méthodes dites de création de tunnel (« tunneling ») peuvent être utilisées. Dans ce cas, les paquets d'une communication sont encapsulés. Une telle encapsulation peut être faite sur la couche réseau ou couche IP (« internet protocol » ou protocole internet), on parle alors de protocole « IPSec » s'appuyant sur le protocole ESP (« Encapsulating Security Payload » ou protocole d'encapsulation de charge utile de sécurité) pour une sécurisation du trafic. Alternativement, une telle encapsulation peut être faite sur la couche de transport, par exemple en utilisant le protocole UDP (« User Datagram Protocol » ou protocole de datagramme utilisateur). On parle alors de VPN (« Virtual Private Network » ou réseau privé virtuel), notamment de VPN SSL/TLS lorsqu'il s'appuie sur les protocoles SSL ou TLS pour sécuriser les paquets d'origine.

Bien qu'elle permette la sécurisation du trafic, la création d'un tunnel rend ce trafic suspect pour un tiers écoutant sur le réseau. Si ce tiers pense que l'information échangée est sensible, il peut capturer le trafic afin de tenter de casser, hors ligne, le chiffrement afin d'exposer le contenu des échanges.

Pour rendre plus difficile encore l'interception du trafic, les méthodes par création de tunnel peuvent être couplées à des techniques dites de rebond, comme TOR (« The Onion Routing » ou routage en oignon) en passant par un ou plusieurs noeuds intermédiaires du réseau de communication.

Outre la lenteur intrinsèque d'une telle communication (puisqu'un nouveau tunnel est créé pour chaque rebond), se pose la question de la nécessité de passer par un tiers de confiance pour initier une session de communication entre une source et un destinataire et partager l'adresse d'un noeud intermédiaire constituant le « point de rendez-vous » de la communication issue de la source, d'une part, et de la communication issue de l'émetteur, d'autre part.

Ainsi, si ces méthodes permettent de répondre à des besoins de protection des communications, elles ne permettent pas l'anonymisation des échanges, en ce qu'elles ne répondent pas au besoin de discrétion pour que le trafic ne soit pas considéré comme suspect par un tiers écoutant sur le réseau.

Parmi les méthodes alternatives permettant l'anonymisation des échanges, on connait la modification à la volée de l'adresse IP de la source et/ou de l'adresse IP du destinataire. La précédente demande de brevet de la demanderesse, FR 3 114 211 A1 présente une telle méthode alternative.

Le document LUO YUE-BIN et al, "A keyed-hashing based self-synchronization mechanism for port address hopping communication", FRONTIERS OF INFORMATION TECHNOLOGY & ELECTRONIC ENGINEERING, ZHEJIANG UNIVERSITY PRESS, HEIDELBERG, vol. 18, no. 5, 27 mai 2017 (2017-05-27), pages 719-728, divulgue un système PAH (« port and address hopping ») permettant de cacher l'identité d'un service comportant, sur la bordure du réseau client hébergeant une application client, un convertisseur client et, sur la bordure du réseau serveur hébergeant une application serveur, un convertisseur serveur, chaque convertisseur étant adapté pour effectuer une substitution des ports et adresses selon un algorithme de codage/décodage.

Le document US 9 742 797 B1 décrit une architecture comportant un système client, disposé sur un noeud client, et un système hôte, disposé sur un noeud hôte, dans laquelle le système hôte comprend un premier port désigné pour la réception de paquets provenant du système client Une interface de saut de port est disposée entre le système client et le système hôte. Elle est adaptée pour relayer les données reçues du système client vers le premier port du système hôte sur la base d'une technique de saut de port.

On souhaiterait disposer d'une méthode d'anonymisation permettant de modifier les à la volée le port logique de l'application destinataire et/ou celui de l'application source.

Le but de la présente invention est par conséquent de répondre à ce besoin.

Pour cela l'invention a pour objet un procédé d'anonymisation d'une communication entre une application source et une application destinataire, un système informatique pour la mise en oeuvre du procédé précédent, un module de saut de port adapté pour être utilisé dans le système précédent et un produit programme d'ordinateur selon les revendications annexées.

L'invention et ses avantages seront mieux compris à la lecture de la description détaillée qui va suivre d'un mode de réalisation particulier, donné uniquement à titre d'exemple illustratif et non limitatif, la description étant faite en se référant aux dessins annexés sur lesquels :
- La Figure 1 est une représentation schématique sous forme de modules fonctionnels d'un dispositif de protection selon un mode de réalisation préféré de l'invention ; et,
- La Figure 2 est une représentation sous forme de blocs du procédé de sécurisation mis en oeuvre par le dispositif de la figure 1.

### Généralités

Dans le cadre d'échanges d'informations sensibles, il est préférable de limiter les possibilités d'attaque et de renseignement.

A cette fin, la présente invention permet de changer régulièrement le port logique (ou port applicatif) d'une ou des deux applications qui communiquent entre-elles et constituant les extrémités d'un canal de communication le long duquel transite la communication.

La présente invention permet de réaliser ce que l'on nomme un brouillage, ou obfuscation (c'est-à-dire une opération consistant à dissimuler la communication pour tout tiers extérieur) des identifiants techniques de port logique utilisés par la couche de transport (TCP ou UDP) du protocole de communication.

L'invention peut être mise en oeuvre en combinaison avec d'autres méthodes d'anonymisation, de chiffrement ou d'authentification connues, afin de limiter les possibilités d'écouter les échanges par un tiers attaquant. En particulier, la combinaison de la présente invention avec celle présentée dans le brevet cité ci-dessus, dédiée à l'obfuscation des adresses IP des machines en communication permet d'anonymiser l'intégralité des indicateurs techniques.

### Architecture

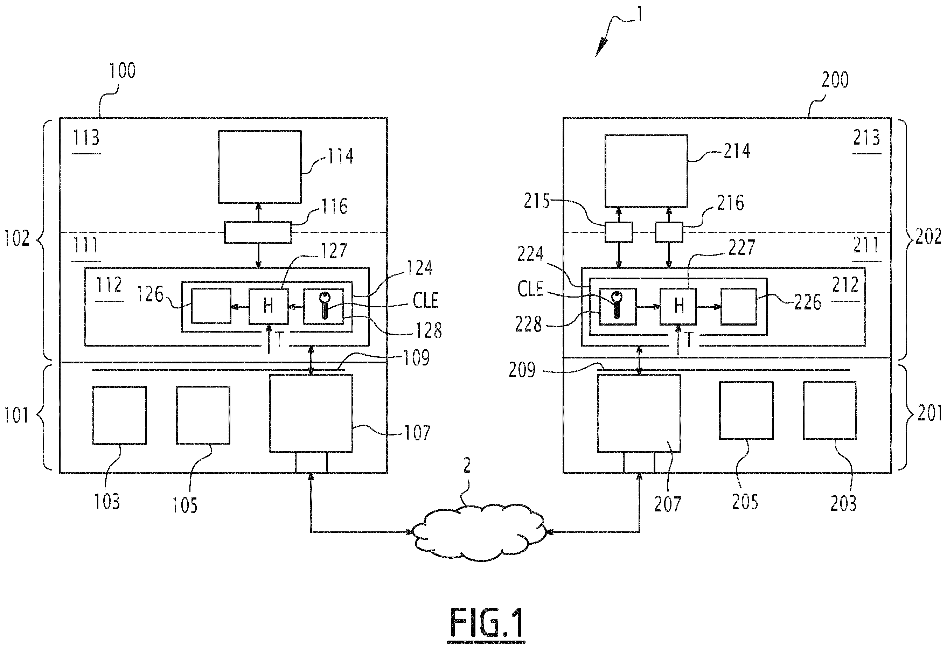

La figure 1 représente schématiquement une infrastructure de communication 1 permettant un échange, via un réseau 2, entre une première machine 100 et une seconde machine 200. Par exemple, dans une infrastructure client/serveur, la première machine est un équipement client, ou client, et la seconde machine est un ordinateur serveur, ou serveur.

Le réseau 2 est un réseau de communication mettant en oeuvre le protocole IP.

La première machine est un ordinateur présentant une couche matérielle 101 et une couche logicielle 102.

La couche matérielle 101 comporte des moyens de calcul, comme un processeur 103, des moyens de mémorisation, comme une mémoire 105, des moyens d'interface entrée-sortie, comme une carte de communication réseau 107 (connectée au réseau 2), et un bus interne 109 permettant les échanges entre les différents composants de la couche matérielle 101.

La couche logicielle 102 est subdivisée entre un système d'exploitation 111 et une couche applicative 113.

Le système d'exploitation 111 réalise une abstraction de la couche matérielle 101 de manière à faire abstraction de la nature concrète des composants de la couche matérielle et offrir aux développeurs d'application des interfaces standardisées.

Le système d'exploitation 111 comporte notamment un noyau 112. Le noyau est adapté pour exécuter des fonctions systèmes sur appel des applications exécutées dans la couche applicative 113. En particulier, le noyau permet de mettre en oeuvre des fonctions systèmes de communication pour lire et écrire dans des registres associés aux interfaces d'entrée-sortie, en particulier ceux associés à la carte communication 107.

La couche applicative 113 comporte une ou plusieurs applications 114 en cours d'exécution.

L'application 114 est par exemple une application cliente. Lorsque dans un échange particulier, l'application 114 émet un message, elle constitue la source de l'information. On parlera alors de l'application source. De manière similaire, lorsque dans un échange particulier, l'application 114 émet un message, elle constitue le destinataire de l'information. On parlera alors de l'application destinataire.

Pour la communication selon le protocole IP, il est d'usage qu'une application, comme l'application 114, utilise une « socket » 116, constituant une interface de programmation API (« Application Programming Interface ») entre la couche applicative 113 et le noyau 112, permettant d'établir un canal de communication dédié à cette application.

Une description similaire pourrait être faite de la seconde machine 200. Un composant de la seconde machine identique ou similaire à un composant de la première machine est référencé par un chiffre de référence égal à celui utilisé pour identifier ce composant identique ou similaire, mais augmenté d'une centaine.

Ainsi, la seconde machine 200 comporte une couche matérielle 201 et une couche logicielle 202, elle-même subdivisée en un système d'exploitation 211 et une couche applicative 213.

La couche matérielle comporte un processeur 203, une mémoire 205, une carte de communication 207 (connectée au réseau 2) et un bus interne 209.

La couche applicative comporte une application 214 en cours d'exécution. L'application 214 est par exemple une application de service. Lorsque dans un échange particulier, l'application 214 émet un message, elle constitue la source de l'information. On parlera alors de l'application source. De manière similaire, lorsque dans un échange particulier, l'application 214 émet un message, elle constitue le destinataire de l'information. On parlera alors de l'application destinataire.

Pour que l'application de service 214 communique selon le protocole TCP-IP, une « socket » de communication 216 est exécutée.

La « socket » 216 constitue une interface entre l'application de service 214 et le noyau 212 du système d'exploitation 211.

Une application se base sur une interface de programmation applicative - API (« Application Programming Interface ») ou « socket » pour établir une communication UDP/TCP. Il s'agit par exemple de la « socket » dite « BSD » (« Berkeley Software Distribution »).

C'est à cette « socket » de communication qu'est associé un port logique.

Ainsi, le canal de communication entre les deux applications 114 et 214 s'étend entre la « socket » 116 et la « socket » 216, qui constituent les extrémités de ce canal. Chacune de ses extrémités est identifiée par un port logique, un port client pour l'application cliente 114 et la « socket » 116 et un port de service pour l'application de service 114 et la « socket » 216.

Pour mémoire, le modèle OSI (ou le modèle TCP-IP) définit une superposition de couches : couche physique correspondant au signal physique se propageant sur le câble ; couche de liaison correspondant au protocole Ethernet ; couche réseau correspondant au protocole internet - IP ; et enfin la couche de transport correspondant au protocole TCP/UDP.

Si la partie de charge utile d'un paquet est générée par l'application, c'est le noyau qui ajoute la partie d'en-tête correspondant aux différentes couches de protocole.

Selon le mode de réalisation de l'invention représenté à la figure 1, le noyau 112 exécute un module de saut de port 124 ou module client. De manière symétrique, le noyau 212 de la machine 200 exécute un module de saut de port 224 ou module serveur.

Un module de saut de port est placé en coupure entre une « socket » de communication et la couche de transport TCP/UDP, de manière à modifier, à la volée, les identifiants techniques associés à la couche de transport, des communications entre l'application source et l'application destinataire.

Un identifiant technique réel est alors remplacé par un identifiant technique virtuel au moment de l'émission d'un paquet et l'identifiant technique virtuel est remplacé par l'identifiant technique réel d'origine au moment de la réception du paquet.

Les identifiants techniques de la couche de transport sont le port logique de l'application source et/ou le port logique de l'application destinataire.

Pour un échange de l'application cliente 114 en tant que source de l'information vers l'application de service 214 en tant que destinataire de cette information, le module 124 substitue les ports logiques réels par des ports logiques virtuels avant d'émettre un paquet, et le module 224 effectue la substitution inverse en remplaçant les ports logiques virtuels du paquet reçu avec les ports logiques réels d'origine.

De manière similaire, pour un échange de l'application de service 240 en tant que source de l'information vers l'application client 114 en tant que destinataire de cette information, le module 224 substitue aux ports logiques réels des applications des ports logiques virtuels avant d'émettre un paquet, et le module 124 effectue la substitution inverse en modifiant les ports logiques virtuels du paquet reçu pour retrouver le port logique réel d'origine des deux applications en communication.

De la sorte, le port logique réel de l'application source et/ou celui de l'application destinataire n'apparaît pas dans les entêtes protocolaires des paquets circulant sur le réseau 2. Un module de saut de port réattribue dynamiquement chaque identifiant technique de la couche de transport de manière transparente pour les applications en communication, en particulier sans rupture d'une communication déjà établie.

Dans un mode de réalisation particulier, un module de saut de port 124 ou 224 est un composant logiciel d'une machine virtuelle exécutée dans l'espace noyau. Le module de saut de port utilise de préférence la technologie noyau « EBPF » (« Extended Berkeley Packet Filter » ou filtre étendu de paquet Berkeley) permettant de programmer des fonctionnalités noyaux sans devoir modifier le code source de ce noyau. Il s'agit d'une machine virtuelle légère.

Le module de saut de port 124 comporte ainsi un bloc 126 de réattribution dynamique de port logique, un bloc 127 de calcul de la valeur d'un port logique virtuel et un bloc 128 de mémorisation d'informations de configuration.

Le bloc 128 permet de mémoriser :
- une plage de ports logiques virtuels indiquant les valeurs des ports logiques utilisables pour la réattribution dynamique,
- une liste comportant un identifiant pour chacune des applications pour lesquelles la fonction de saut de port doit être mise en oeuvre (cet identifiant pouvant notamment être l'adresse de l'application, c'est-à-dire le couple adresse IP et port logique réel associée à celle-ci) ;
- un secret partagé entre la machine source et la machine destinataire pour permettre une association déterministe entre un port logique virtuel et un port logique réel. Par exemple, ce secret est une clé symétrique CLE partagée entre les modules 124 et 224 à chaque extrémité du canal de communication et stockée dans le bloc 128 et 228 par exemple.

Il est à noter que la connaissance de l'adresse IP ou du port logique réel d'une application relève d'un mécanisme standard, hors du cadre de la présente demande, et connue de l'homme du métier. Par exemple l'adresse IP peut être codée « en dur » ou résulter de l'aboutissement d'une résolution de nom de domaine connu au préalable. Par exemple encore le port logique réel peut être codé « en dur » (port 80 pour une application http) ou connu au préalable.

La connaissance de ces deux informations est de la responsabilité de l'application. Par exemple, une application cliente du type navigateur internet sait quel port utiliser pour contacter un serveur du type http (port 80) ou https (port 443).

La donnée, lors de la configuration du module, de la liste comportant un identifiant pour chacune des applications pour lesquelles la fonction de saut de port doit être mise en oeuvre, permet au module de saut de port de connaitre les ports applicatifs et adresses IP qu'il doit intercepter.

Le bloc 127 met en oeuvre une fonction de chiffrement H. Pour calculer un port logique virtuel, la fonction de chiffrement prend comme arguments le secret CLE (paramètre privé de la fonction de chiffrement), un instant courant T (paramètre universel de la fonction de chiffrement) et l'identifiant de l'application dont on cherche à masquer le port logique réel (cet identifiant étant de préférence le port logique réel associé à l'application). Eventuellement, une opération mathématique modulo est appliquée, de manière à être certain que le port logique virtuel calculé par la fonction de chiffrement H tombe effectivement dans la plage de ports logiques virtuels mémorisée par le bloc 128.

Inversement, pour calculer un port logique réel, la fonction de chiffrement prend comme arguments le secret CLE (paramètre privé de la fonction de chiffrement), un instant courant T (paramètre universel de la fonction de chiffrement) et le port logique virtuel. Eventuellement, une opération mathématique modulo est appliquée, de manière à être certain que le port logique réel calculé par la fonction de chiffrement H tombe effectivement dans la plage de ports logiques réel des applications exécutées sur la machine 100.

La fonction de chiffrement H est par exemple un algorithme du type tirage aléatoire, comme un mécanisme de « mot de passe à usage unique » (« one time password ») défini par exemple par la norme HMAC UDP / librairie HETP / AOTP RFC 4226.

Le paramètre de la fonction de chiffrement relatif à l'identifiant de l'application dont on cherche à masquer le port logique réel, peut être n'importe quel paramètre distinctif. L'ajout de cet identifiant permet de discriminer deux applications, notamment deux applications qui voudraient utiliser la même adresse (couple adresse IP / port logique).

Le bloc 126 ou 226 connaît par configuration (mémorisée dans le bloc 128 ou 228) les ports logiques et les adresses IP des applications pour lesquelles réaliser la translation de port.

Le bloc 126 intercepte les messages provenant de la « socket » 116 et substitue à un port logique réel, le port logique virtuel calculé par la fonction de chiffrement H, et ceci de préférence pour le port logique de l'application source 114 et pour le port logique de l'application destinataire 214.

Le bloc 126 reçoit les messages provenant de la carte 107 et substitue à un port logique virtuel, le port logique réel calculé par la fonction de chiffrement H, et ceci de préférence pour le port logique de l'application source 114 et pour le port logique de l'application destinataire 214.

De manière symétrique, le module 224 comporte un bloc 226 de réattribution dynamique, un bloc 227 de calcul d'une fonction de chiffrement, et un bloc de configuration 228 comportant notamment la clé symétrique CLE partagée entre la source le destinataire.

De manière similaire au bloc 126, le bloc 226 effectue la translation port logique virtuel vers port logique réel lors de la réception d'un paquet et la translation port logique réel vers port logique virtuel lors de l'émission d'un paquet.

La manière d'échanger le secret (c'est-à-dire ici la clé privée symétrique CLE) entre le module de saut de port client 124 et le module de saut de port serveur 224 est hors de la portée de la présente invention. De nombreuses solutions sont connues de l'homme du métier. Par exemple, la distribution de la clé pourrait être faite par diffusion via un canal sécurisé entre les deux modules.

L'instant courant T est obtenu par le module 124 et par le module 224 à partir d'une base de temps commune. Par exemple, l'instant courant T peut être obtenu à partir d'un signal temporel délivré par une constellation de satellites (comme le système « global positionning système » - GPS ) ou encore en consultant une horloge internet commune (par exemple un serveur du réseau 2 permettant de délivrer un signal d'horloge en mettant en oeuvre un protocole de temps de réseau « Network Time Protocol » - NTP).

Il est cependant à noter que cette dernière solution peut introduire une latence différente entre les deux machines en communication, de sorte qu'à un instant donné, la valeur de l'instant courant T prise en compte dans la fonction de chiffrement peut différer entre les deux modules.

Or, il faut que les deux modules partagent les deux arguments de secret et de temps de la fonction de chiffrement pour pouvoir, d'un côté, déterminer la valeur du port logique virtuel à partir de la valeur du port logique réel et, de l'autre côté, remonter sans ambiguïté à la valeur du port logique réel d'origine à partir du port logique virtuel.

Un module modifie au moins un identifiant de la couche transport de manière dynamique et cohérente pour l'ensemble des paquets d'un flux entre deux applications en communication.

Une fois l'association port logique virtuel - port logique réel établie par exécution de la fonction de chiffrement, tous les paquets de la communication sont avantageusement traités de la même manière, mais une autre association peut être recalculée au cours de la communication.

Un module de saut de port conserve une table de correspondance mémorisant les associations courantes entre ports logiques réels et ports logiques virtuels. Cette liste est par exemple mémorisée dans le bloc 128, respectivement 228. Cela évite d'avoir à exécuter la fonction de chiffrement à chaque fois qu'il faut faire une translation de port.

En variante, la réallocation dynamique peut être redéfinie au cours d'une même session en modifiant l'appariement port logique/port virtuel. La fréquence de modification de l'association d'un port logique réel particulier avec un port logique virtuel peut dépendre de la précision de l'horloge de synchronisation des deux modules de saut de port. Si cette précision est faible, cette fréquence doit être relativement élevée.

Afin que l'opération de translation port réel - port virtuel soit transparente pour l'application destinataire, il est nécessaire que le module destinataire réalise la modification inverse sur les identifiants de la couche de transport lors de la réception d'un paquet du flux. C'est l'utilisation d'une clé symétrique qui permet de retrouver les identifiants de la couche de transport originaux à partir des identifiants modifiés.

### Procédé

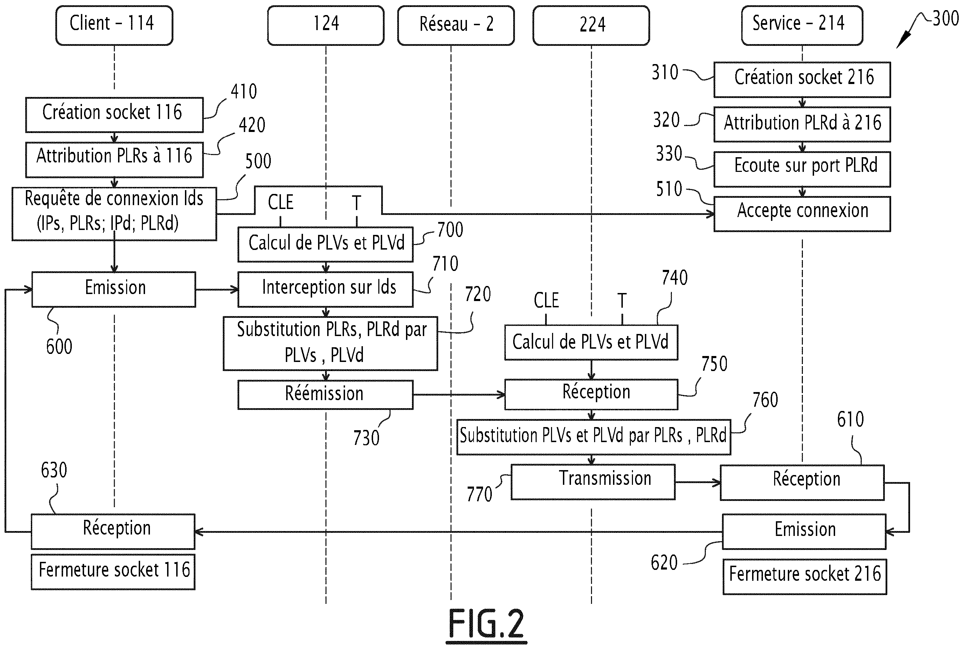

La figure 2 représente, de manière schématique, un mode de réalisation particulier du procédé de protection selon l'invention.

Le procédé 300 comporte une étape 310 de création de la « socket » 216 par l'application de service 214.

Cette étape création de « socket » est suivie d'une étape 320 d'attribution d'un port logique réel destinataire PLRd pour la « socket » 216.

Puis, la « socket » 216 se place en écoute sur le port PLRd (étape 330).

Parallèlement, l'application cliente 114 crée à l'étape 410 la « socket » 116.

À l'étape 420, un port logique réel source est attribué à la « socket » 116. Il est noté PLRs.

Dans l'étape 500, l'application cliente 114 cherche à initier une connexion avec l'application de service 214.

Elle émet une requête de connexion sur le port PLRs.

Celle-ci comporte un identifiant de l'application 114 en tant qu'application source de cette requête.

Cet identifiant est par exemple l'adresse de l'application 114, constituée de l'adresse IP, IPs, de la machine 100 et du port logique de l'application cliente 114, à savoir le port réel PLRs.

Cette requête comporte un identifiant de l'application 214 en tant qu'application destinataire de cette requête.

Cet identifiant est par exemple l'adresse de l'application 214, constituée de l'adresse IP, IPd, de la machine 200 et du port logique de l'application 214, à savoir le port PLRd.

On notera que l'application source connait l'adresse de l'application destinataire qu'il cherche à accéder, par exemple après la résolution d'un nom de domaine par un serveur de résolution de nom de domaine - DNS (« Domain Name System »).

À l'étape 510, l'application 214 destinataire de la requête de connexion, reçoit cette dernière sur le port PLRd.

Après une procédure d'authentification, l'application destinataire 214 accepte la connexion.

Il s'en suit un échange entre l'application cliente 114 et l'application de service 214 par une succession d'émission de messages par l'application cliente 114 (étape 600) et de réception de ces messages par l'application de service 214 (étape 610), ainsi que l'émission de messages par l'application de service 214 (étape 620) à destination de l'application cliente 114 qui reçoit ces messages dans une étape 630.

Selon l'invention, par exemple pour la transmission d'un message depuis l'application cliente 114 (source) vers l'application de service 214 (destinataire), le message élaboré par l'application 114 intègre les identifiant des applications source et destinataire (en particulier les ports logiques réels de ces applications).

le module 124, placé en coupure entre l'application cliente 114 et le réseau 2 intercepte le message sur la base de l'identifiant de l'application source et/ou de l'application destinataire émettrice de ce message et qui est inclus dans le message (étape 710). De préférence, le module 124 consule la liste des applications pour lesquelles une substitution dynamique des identifiants techniques est à réaliser (liste mémorisée dans le bloc 128)

Dans une étape préalable (réalisée par exemple suite à une première émission de la part de l'application cliente), le module 124 a calculé un identifiant technique de substitution pour l'application source et l'application destinataire.

Ce calcul, qui est effectué à l'étape 700, permet de déterminer un port logique virtuel PLVs pour l'application source à partir de la clé CLE, de l'instant courant T et d'un identifiant de l'application source (comme le port logique réel PLRs de l'application source).

Ce calcul permet également de déterminer un port logique virtuel PLVd pour l'application destinataire à partir de la clé CLE, de l'instant courant T et d'un identifiant de l'application destinataire (comme le port logique réel PLRs de l'application destinataire).

L'association PLRs et PLVs d'une part et l'association PLRd et PLVd d'autre part sont mémorisées dans une table de correspondance du bloc 128 pour leur utilisation au cours de la suite de la session de communication (aussi bien en émission qu'en réception).

Ainsi, suite à l'interception à l'étape 710 d'un message provenant de la « socket » 116, le module 124 est propre à substituer, au cours d'une étape 720, les indicateurs PLRs et PLRd d'un message par leurs équivalents virtuels PLVs et PLVd.

À l'étape 730, le message dont les indicateurs techniques ont été substitués est émis via le réseau 2 à destination de la machine 200.

Ce message est reçu à l'étape 750 par le module 224 exécuté sur la machine 200.

Pour effectuer l'opération inverse de celle réalisée par le module 124, le module 224 a préalablement calculé, au cours d'une étape 740 par exemple, réalisée suite à une première réception d'un message de la part de l'application source, les indicateurs PLRs et PLRd en utilisant la clé de chiffrement symétrique.

Plus précisément, le module 224 détermine un port logique réel PLRs pour l'application source à partir de la clé CLE, de l'instant courant T et du port logique virtuel PLVs contenu dans le message reçu.

De même, le module 224 détermine un port logique réel PLRd pour l'application detinataire à partir de la clé CLE, de l'instant courant T et du port logique virtuel PLVs contenu dans le message reçu.

L'association PLRs et PLVs d'une part et l'association PLRd et PLVd d'autre part sont mémorisées dans une table de correspondance du bloc 228 pour pouvoir être utilisées au cours de la suite de la communication (aussi bien en réception qu'en émission).

Ainsi, suite à la réception d'un nouveau message, le module 224 substitue, dans l'étape 760, les indicateurs virtuels PLVs et PLVd du message reçu à l'étape 750 avec les ports logiques réels associés, respectivement PLRs et PLRd.

Le message d'origine ainsi restauré est ensuite transmis, à l'étape 770, à l'application destinataire, ici l'application de service 214.

Cette dernière la reçoit à l'étape 610 et la traite.

La communication entre l'application cliente et l'application de service se poursuit par exemple par l'émission d'une réponse par l'application de service 214 (agissant alors en tant que source du message) vers l'application cliente 114 (agissant alors en tant que destinataire du message). Les étapes 710, 720, 730, 750, 760 et 770 sont itérées, mais cette fois-ci, c'est le module 224 qui effectue la substitution des indicateurs techniques réels par les indicateurs techniques virtuels et c'est le module 124 qui effectue la transformation inverse, des indicateurs techniques virtuels vers les indicateurs techniques réels, de manière à pouvoir retransmettre à l'application cliente 114 le message initialement généré par l'application de service 214.

Ainsi, on constate que, les messages qui circulent sur le réseau 2 comportent des indicateurs techniques virtuels.

La figure 5 représente une phase de connexion initiale entre les sockets (étapes 500 et 510).

Il est à souligner que cette phase de connexion n'est pas forcément présente. En effet, tous les protocoles de transport ne sont pas en mode connecté. Par exemple, le protocole UDP n'a pas de phase de connexion.

Si une telle phase de connexion entre les sockets est présente, il est préférable que les échanges de messages associées à cette phase de connexion fassent également l'objet d'une translation port logique / port virtuel, pour masquer l'intégralité des messages de la communication. Les étapes 700 d'une part et 740 d'autre part d'exécution de la fonction de chiffrement H peuvent avantageusement être réalisées lors de l'échange de cette requête de connexion et le résultat d'appariement port logique réel - port logique virtuel d'une application utilisé sur la suite de la session de communication.

### Variantes de réalisation

Dans le mode de réalisation préféré présenté ci-dessus, les modules de saut de port sont implémentés dans le noyau des machines sur lesquelles sont exécutées les applications échangeant des informations sensibles. Alternativement, l'un et/ou l'autre module pourrait être exécuté par une passerelle située entre le réseau local sur lequel se trouve la machine exécutant l'application sensible et le réseau 2. Le trafic s'effectue alors avec les indicateurs techniques réels sur le réseau local et avec les indicateurs techniques virtuels sur un réseau public.

En variante, seul le port logique d'une des deux applications en communication est masqué.

En variante, la présente invention est combinée avec le masquage de l'adresse IP de la machine sur laquelle est exécutée l'application, afin de cacher l'ensemble des indicateurs techniques de cette application.

La présente invention permet d'anonymiser le trafic en effectuant des sauts de port.

Cependant, la mise en oeuvre de ce procédé peut déclencher un système d'interception légale (« legal interception ») sur le réseau par un tiers pour lequel le trafic apparaitrait suspect, car utilisant des ports inhabituels ou une structure de paquet inhabituelle sur un port réservé.

En effet, le trafic émis par un type particulier d'application est en général associé à un certain port caractéristique ou réservé (par exemple port 80, port 80 80, port 80 00 pour les services http). Or, avec la mise en oeuvre du présent procédé conduisant à ce que la valeur d'un port logique virtuel soit égale à celle d'un port réservé, la structure des paquets incidents sur ce port peut ne pas correspondre à celle des paquets normalement attendus sur ce port (service http par exemple), cela risque d'éveiller la suspicion d'un tiers surveillant le trafic sur le réseau 2.

Toujours dans cet ordre d'idée, le trafic suit en général un certain motif qui peut être identifié par l'emploi de règles statistiques. Si l'association entre un motif et les ports réservés diffère de ce qui est normalement attendu, cela peut déclencher l'exécution d'un système d'analyse du trafic, qui enregistrera alors les échanges pour effectuer une analyse plus poussée, ultérieurement ou hors ligne.

Pour se prémunir d'une telle interception légale, le procédé selon l'invention est avantageusement perfectionné en injectant un trafic de fond. Par exemple, lorsque le port logique virtuel calculé par le module de saut de port tombe dans l'ensemble des ports réservés, alors le trafic de fond injecté est caractéristique des applications et services qui utilisent normalement ce port réservé.

Avantageusement, au cours d'une même session, le recalcul à intervalle du port logique virtuel conduit à des sauts entre uniquement un groupe de ports logiques réservés. Un trafic de fond est injecté sur chacun des ports de ce groupe de ports logiques réservés durant toute la durée de la session, tandis que, pendant un intervalle, l'information sensible est véhiculée par un seul canal avant d'effectuer un nouveau saut de port pour utiliser un autre canal.

L'information sensible est ainsi découpée en paquets, ordonnancés sur différents canaux (différents ports logiques virtuels source et destination) et noyés dans un trafic aux propriétés normalement attendues sur ces ports logiques réservés.

L'ensemble de ces fonctions permet une anonymisation de l'information sensible dans un trafic de fond ayant une signature banale afin d'éviter le déclenchement d'une interception légale.

### Avantages de l'invention

La substitution du port logique constitue une modification transparente pour les applications, au sens où elle n'impacte ni l'application elle-même, ni l'interface de programmation (à savoir la « socket » entre cette application et le noyau) lorsque le module de saut de port est exécuté par le noyau.

L'invention ne crée pas de rupture dans la communication. Un saut de port peut avoir lieu au cours d'une communication établie sans impact sur cette communication.

Grâce à ce mécanisme, l'information échangée entre deux applications peut être morcelée entre plusieurs canaux. Un attaquant cherchant à récupérer l'information sensible doit être en mesure d'identifier le ou les canaux utilisés pour le morcellement. Cependant, ces canaux dépendent du secret partagé entre les deux modules de saut de port mis en oeuvre le long le long de la liaison de communication.

Même s'il parvient à ses fins, l'attaquant devra ensuite réassembler les messages de manière cohérente et éventuellement, si l'information sensible contenue dans un message est chiffrée, déchiffrer cette information.

L'invention est interopérable avec l'état de l'art.

L'invention force un attaquant à écouter un grand nombre de canaux pour espérer recomposer le flux et accéder aux informations sensibles.

L'invention permet également de limiter la surface temporelle d'une attaque depuis le réseau sur un service ou une application. En effet, le service réel n'est présent sur un port virtuel que pendant un intervalle de temps limité, ce qui rend l'attaque sans effet.

## Revendications

1. Procédé (300) d'anonymisation d'une communication entre une application source (114) et une application destinataire (214), le procédé comportant les étapes consistant à :
- création (600), pour l'application source, d'un message, ledit message intégrant au moins un port logique réel (PLRs, PLRd) de l'application source ou de l'application destinataire ;
- interception (410), par un module de saut de port côté application source (124), du message ;
- substitution du port logique réel par un port logique virtuel (PLVs, PLVd), pour créer un message anonymisé ;
- transmission (730) du message anonymisé sur un réseau (2) vers l'application destinataire ;
- réception (750), par un module de saut de port côté application destinataire (224), du message anonymisé ;
- substitution inverse du port logique virtuel par le port logique réel ; et,
- communication (770) du message à l'application destinataire,
**caractérisé en ce qu'**un module de saut de port calcule le port logique virtuel à associer au port logique réel d'une première application parmi l'application source ou l'application destinataire en utilisant une fonction aléatoire (H), qui dépend :
- d'un paramètre de secret (CLE), qui est partagé entre les modules de saut de port côté application source et côté application destinataire (124, 224) ;
- d'un paramètre universel (T) ; et,
- d'un identifiant de la première application,
**en ce qu'**un module de saut de port calcule le port logique réel à associer à un port logique virtuel d'une seconde application parmi l'application source ou l'application destinataire en utilisant la même fonction aléatoire, qui dépend :
- du paramètre de secret (CLE) ;
- du paramètre universel (T) ; et,
- d'un identifiant de la seconde application,
et **en ce que** le paramètre universel (T) est un instant courant délivré par une horloge commune aux modules de saut de port côté application source et côté application destinataire (124, 224).

2. Procédé selon la revendication 1, dans lequel le paramètre de secret est une clé privée symétrique.

3. Procédé selon l'une quelconque des revendications précédentes, dans lequel un trafic de fond ayant une signature banalisée est injecté sur ou vers le port logique virtuel.

4. Procédé selon l'une quelconque des revendications précédentes, dans lequel le port logique réel pour l'application source est celui d'une interface de communication ouverte par l'application source, et dans lequel le port logique réel pour l'application destinataire est celui d'une interface de communication ouverte par l'application destinataire.

5. Système (1) comportant une application source (114) exécutée sur une machine source (100) et une application destinataire (214) exécutée sur une machine destinataire (200), et un réseau (2) pour acheminer le trafic entre les machines source et destinataire, le système comportant, en outre, un module de saut de port côté application source (124), disposé en coupure entre l'application source et le réseau, et un module de saut de port côté application destinataire (224), disposé en coupure entre le réseau et l'application destinataire, **caractérisé en ce que** le système comporte en outre une horloge commune aux modules de saut de port côté application source et côté application destinataire (124, 224) pour leur délivrer un instant courant, les modules de saut de port étant adaptés pour mettre en oeuvre un procédé d'anonymisation selon l'une quelconque des revendications 1 à 4.

6. Système selon la revendication 5, dans lequel un module de saut de port côté application source (124), respectivement côté application destinataire (224), est un logiciel exécuté par le noyau (112) de la machine source, respectivement le noyau (212) de la machine destinataire.

7. Module de saut de port (124, 224) adapté pour être mise en oeuvre dans un système conforme à la revendication 5 ou à la revendication 6.

8. Produit programme d'ordinateur comportant des instructions qui lorsqu'elles sont exécutées par un processeur d'une machine permettent à un noyau d'un système d'exploitation de ladite machine d'être pourvu d'un module de saut de port conforme à la revendication 7.
